# EUROPÄISCHE PATENTSCHRIFT

(11) **EP 0 461 575 B1**
(45) Veröffentlichungstag und Bekanntmachung des Hinweises auf die Patenterteilung: **25.05.1994**
(21) Anmeldenummer: 91109460.5
(22) Anmeldetag: 10.06.1991
(51) Int. Cl.: B23K 11/04, E01B 29/46

(54) **Mobiles Abbrennstumpf-Schweissaggregat**
Mobile flash-butt welder
Agrégat mobile de soudure par fusion

(30) Priorität: 15.06.1990 AT 1295/90
(43) Veröffentlichungstag der Anmeldung: 18.12.1991
(73) Patentinhaber: Franz Plasser Bahnbaumaschinen- Industriegesellschaft m.b.H., 1010 Wien (AT)
(72) Erfinder: Theurer, Josef, A-1010 Wien (AT)
(74) Vertreter: Rau, Manfred, Dr. Dipl.-Ing.

(56) Entgegenhaltungen:
- EP-A- 0 326 793
- DD-A- 244 998
- DE-A- 1 465 042

## Beschreibung

Die Erfindung betrifft ein mobiles Abbrennstumpf-Schweißaggregat nach dem Oberbegriff des Anspruches 1.

Durch die EP-A 0 326 793 ist ein derartiges mobiles Abbrennstumpf-Schweißaggregat bekannt, das höhenverstellbar auf einer gleichsverfahrbaren Maschine befestigt ist. Jeder der beiden über Stauchzylinder in Schienen- bzw. Maschinenlängsrichtung zueinander verschiebbaren Aggregatblöcke weist ein Klemmund Schweißbacken-Paar auf, das jeweils durch einen hydraulischen Klemmzylinder an den Schienensteg anpreßbar ist. Die Klemm- und Schweißbacken-Paare dienen gleichzeitig zur Einspannfunktion auch als Elektroden, durch die der Schweißstrom auf die beiden miteinander zu verschweißenden Schienenendbereiche übertragbar ist. Zur Durchführung des Schweißvorganges werden die festgeklemmten Schienenenden unter Beaufschlagung der beiden Stauchzylinder gemeinsam mit den beiden Aggregatblöcken mit ca. 0,25 mm pro Sekunde zueinander bewegt. Bei Berührung der Schienenenden erreicht der Schweißstrom einen ersten Spitzenwert, wobei die Vorschubbewegung zur Erzielung einer geeigneten Schmelztemperatur gestoppt wird. Zum Abschluß des Schweißvorganges wird der sogenannte Stauchschlag durchgeführt, bei dem die auf Schmelztemperatur erhitzten Schienenenden mit sehr hohen Druckkräften aufeinandergepreßt werden. Insbesondere zur Unterstützung dieses Stauchschlages bei sehr langen und schweren Schienen ist eine das Abbrennstumpf-Schweißaggregat umschließende, ringförmige Schienenziehvorrrichtung vorgesehen. Dieses weist im Bereich beider Längsenden zangenartig zueinander verschwenkbare Klemmzangen mit mit zur Anlage an den Schienensteg vorgesehenen Klemmbacken auf. Die in Schienenlängsrichtung einander gegenüberliegenden Enden der Klemmzangen sind jeweils durch einen Hydraulikzylinder miteinander verbunden. Die Durchführung des erwähnten Stauchschlages erfolgt unter synchronem Einsatz der Stauchzylinder des Schweißaggregates und der beiden Hydraulikzylinder der Schienenziehvorrichtung.

Aus der DD-A-244 998 ist ein mobiles Abbrennstumpf-Schweißaggregat zum Verschweißen der beiden Enden von einander stirnseitig benachbarten Schienen bekannt. Dieses Aggregat besteht aus einem in vertikaler und horizontaler Richtung biegeelastischen Träger, der mittig von einem Fahrzeug aus auf die beiden zu schweißenden Schienenenden aufgelegt wird. An diesem Träger sind mindestens sechs Klemmvorrichtungen angeordnet, deren Klemmbacken der Form des Schienenprofils angepaßt sind. Die Klemmvorrichtungen am festen Schienenende sind starr auf dem biegeelastischen Träger angebracht, während die Klemmvorrichtungen am längsbeweglichen Schienenende längsbeweglich auf dem Träger gelagert sind. Sie sind über gelenkig gelagerte Schub- und Zugstangen mit zwei Hydraulikzylindern verbunden. Der Träger ist im Bereich der Schweißstelle so ausgebildet, daß diese zugänglich ist. Hierzu geht er in diesem Bereich in einen Rahmen über. Zur Durchführung eines Schweißvorganges werden die Klemmvorrichtungen am festen Schienenende geschlossen und die dem längsbeweglichen Schienenende zugeordneten Klemmvorrichtung in eine dem erforderlichen Stauchweg entsprechende Ausgangsstellung gebracht und dann geschlossen. Bei der hydraulischen Beaufschlagung der Stauchzylinder stellt sich in Wechselwirkung zwischen den Elastizitäten der Schienenenden und des biegeelastischen Trägers eine resultierende stetige Biegelinie über die gesamte Länge des biegeelastischen Trägers ein. Hierdurch wird erreicht, daß die Schienenenden exakt aufeinander ausgerichtet werden.

Aus der DE-C-14 65 042 ist ein Abbrennstumpf-Schweißaggregat bekannt, das zum Verschweißen von verlegten Schienen dient. Ein derartiges Schweißaggregat setzt sich aus zwei in Längsrichtung der Schienen bzw. von zwei Stauchzylindern zueinander verschiebbaren Aggregatblöcken zusammen, die jeweils aus zwei um eine in Längsrichtung der Stauchzylinder verlaufende Achse zueinander verschwenkbaren Teilen gebildet sind. Diese Teile weisen in ihrem unteren Bereich als Elektroden wirksame Klemmbacken zur gleichenzeitigen Anlage an beide Schienenseiten auf und sind in ihren oberen Endbereichen durch einen Anpreßzylinder miteinander verbunden.

Die Aufgabe der vorliegenden Erfindung liegt in der Schaffung eines mobilen Abbrennstumpf-Schweißaggregates der gattungsgemäßen Art, mit dem bei lediglich geringer konstruktiver Änderung der beiden Aggregatblöcke besonders hohe Zugkräfte auf die miteinander zu verbindenden Schienenenden aufbringbar sind.

Diese Aufgabe wird erfindungsgemäß durch die Merkmale im Anspruch 1 gelöst. Durch diese erfindungsgemäße Lösung wird die Schaffung einer baulichen Einheit ermöglicht, mit der unter weitgehender konstruktiver Beibehaltung des bereits im Einsatz bestens bewährten Abbrennstumpf-Schweißaggregates sowie unter Vermeidung einer Überlastung der Klemmbacken bzw. der mit diesen verbundenen Blockteile wesentlich höhere Zugkräfte auf die zu verschweißenden Schienenenden auftragbar sind. Außerdem ist durch die mechanische Verbindung der Klemmelemente mit den beiden Aggregatblöcken eine einfache synchrone Übertragung der Zugkräfte sowohl durch die als Elektroden wirksamen Klemmbacken der Aggregatblöcke als auch durch die externen Klemmelemente ohne den Einsatz einer aufwendigen und komplizierten Synchronsteuerung sichergestellt. Das heißt, daß durch die Anlenkung der Klemmelemente diese automatisch mit der Längsverschiebung der Klemmbacken bzw. der Aggregatblöcke mitbewegt werden. Ein weiterer Vorteil der Anordnung außerhalb der beiden Aggregatblöcke ist auch darin zu sehen, daß damit die Klemmelemente ohne Rücksichtnahme auf die konstruktive Ausführung der Aggregatblöcke entsprechend großzügig dimensionierbar sind. Somit sind mit einem derartigen Schweißaggregat auch besonders schwere bzw. lange Schienen problemlos verschweißbar.

Die durch die Merkmale im Anspruch 2 gekennzeichnete Ausgestaltung der Erfindung zeichnet sich durch eine konstruktiv besonders einfache und in Verbindung mit der Hebelwirkung der Klemmzangen besonders wirksame Lösung aus. Außerdem ist damit die Funktion der beiden Aggregatblöcke zur Durchführung der Schweißarbeiten in keiner Weise beeinträchtigt.

Die Ausgestaltung des Schweißaggregates nach Anspruch 3 ermöglicht eine wesentliche Erhöhung der aufbringbaren Zugkräfte, wobei durch die Anordnung in einer gemeinsamen Ebene die Längsachsen der Stauchzylinder in unmittelbarer Nähe zur horizontalen Symmetrieebene der Klemmbacken zu liegen kommen. Damit ist sichergestellt, daß die Zugkräfte unter Vermeidung einer nachteiligen, um eine in Schienenquerrichtung verlaufende Achse wirksamen Hebelwirkung auf die Klemmbacken übertragbar sind.

Die Ausgestaltung der Erfindung nach Anspruch 4 gestattet eine exakte Steuerung der Öffnungs- und Schließbewegungen der Klemmzangen, wobei die die Klemmzangen mit den Aggregatblöcken verbindenden Zugglieder zur problemlosen Übertragung höchster Zugkräfte unter Vermeidung einer Längenänderung in einfachster Weise auszubilden sind.

Mit der Ausbildung nach Anspruch 5 ist eine besonders gleichmäßige Längsverschiebung des die beiden Klemmzangen miteinander verbindenden Querjoches zur Durchführung der Öffnungs- und Schließbewegung erzielbar.

Durch die Anordnung der Klemmzangen und Zugglieder in einer gemeinsamen, bezüglich der Höhe der Klemmbacken mittigen Symmetrieebene gemäß den Merkmalen des Anspruches 6 wird der Vorteil erreicht, daß die hohen Zugkräfte unter Vermeidung eines auf die Schwenkachse der Klemmzangen wirksamen Kippmomentes auf die Schienenenden übertragbar sind. Damit ist eine sehr nachteilige Biegebelastung sowohl der Klemmzangen-Schwenkachsen als auch der Schienenenden zuverlässig ausgeschlossen.

Mit der in den Merkmalen des Anspruches 7 angeführten speziellen Anlenkung der Zugglieder ist eine ungehinderte Öffnungsbewegung der beiden zur Anlage der Klemmbacken an den Schienensteg zangenförmig zueinander verschwenkbaren Teile eines Aggregatblocks sichergestellt.

Die Ausgestaltung des Aggregates nach den Merkmalen des Anspruches 8 ermöglicht bei unveränderter Distanzierung der beiden Aggregatblöcke zueinander eine ungehinderte Längsverschiebung der Schweißwulst-Abschervorrichtung. Damit ist eine problemlose Entfernung des Schweißwulstes unter Aufrechterhaltung der auf die verschweißten Schienenenden einwirkenden Zugkräfte durch die Stauchzylinder durchführbar, so daß die Zugspannungen erst nach Abkühlung der Schweißverbindung wirksam werden.

Schließlich zeichnet sich eine weitere Ausgestaltung der Erfindung nach den Merkmalen des Anspruches 9 dadurch aus, daß mit einem derartigen Zangenkörper die Anpreßkräfte an die Schiene mit Hilfe des Anpreßzylinders unabhängig von den in Schienenlängsrichtung verlaufenden Zugkräften einstellbar sind.

Im folgenden wird die Erfindung an Hand zweier in der Zeichnung dargestellter Ausführungsbeispiele näher beschrieben.

Es zeigen:
Fig. 1 eine Seitenansicht eines aus zwei Aggregatblöcken gebildeten Abbrennstumpf-Schweißaggregates, wobei jedem Aggregatblock zum beidseitigen Anpressen an die Schiene vorgesehene Klemmelemente zugeordnet sind,
Fig. 2 eine Draufsicht auf das Abbrennstumpf-Schweißaggregat gemäß Fig.1, wobei in der unteren Hälfte die Klemmelemente in geöffneter und in der oberen Hälfte in geschlossener Position dargestellt sind,
Fig. 3 eine Draufsicht auf eine andere Ausführungsvariante der mit einem Aggregatblock des Abbrennstumpf-Schweißaggregates verbundenen Klemmelemente und
Fig. 4 eine Seitenansicht der in Fig.3 dargestellten Klemmelemente.

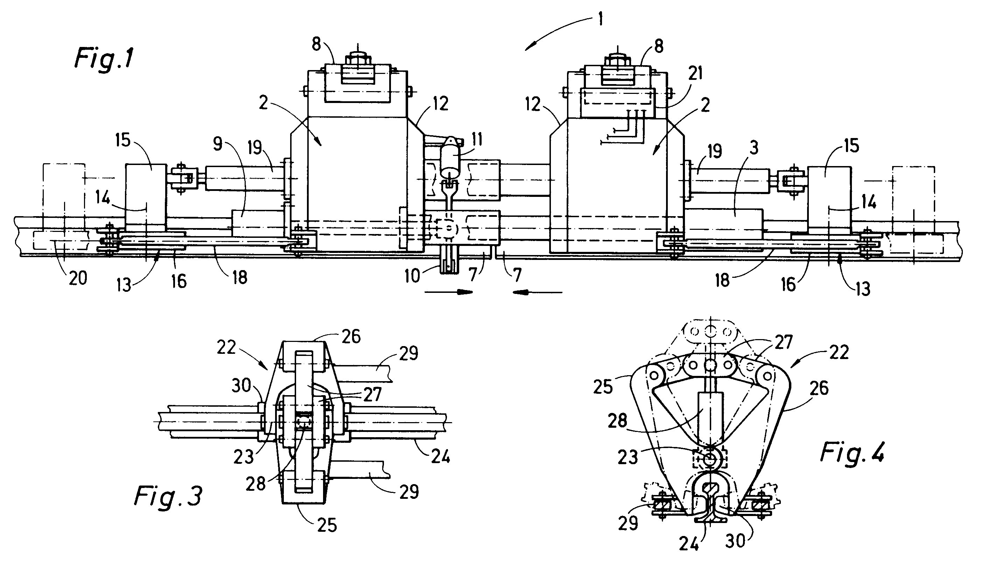

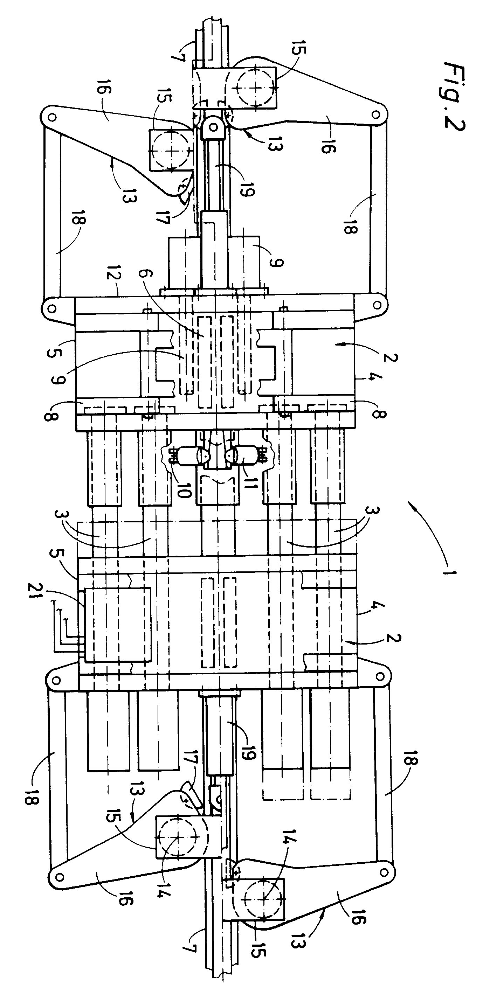

Ein in Fig.1 und 2 dargestelltes Abbrennstumpf-Schweißaggregat 1 setzt sich im wesentlichen aus zwei voneinander distanzierten Aggregatblöcken 2 zusammen, die durch vier in einer gemeinsamen horizontalen Ebene angeordnete und parallel zueinander verlaufende Stauchzylinder 3 in deren Längsrichtung verschiebbar miteinander verbunden sind. Jeder der beiden Aggregatblöcke 2 besteht jeweils aus zwei - um eine in Schienenlängsrichtung verlaufende Achse - zangenförmig zueinander verschwenkbaren Aggregat-Teilen 4,5 mit als Elektroden wirksamen Klemmbacken 6 zur Anlage an zwei miteinander zu verschweißende Schienen bzw. Schienenenden 7. Die beiden Aggregat-Teile 4,5 sind in ihrem oberen Endbereich über ein Hebelsystem 8 und einen mit diesem verbundenen, vertikalen Spannzylinder zum Anpressen der Klemmbacken 6 an die Schienen 7 miteinander verbunden. Ein Aggregatblock 2 ist mit einer durch zwei Abscherzylinder 9 in Längsrichtung der Stauchzylinder 3 verschiebbaren Schweißwulst-Abschervorrichtung 10 verbunden, wobei an dieser befestigte Anpreßzylinder 11 gelenkig an einem Gehäuse 12 des Aggregatblockes 2 befestigt sind.

Jeder Aggregatblock 2 ist im voneinander abgewandten Endbereich mit in Längsrichtung der Stauchzylinder 3 distanzierten, zum beidseitigen Anpressen an die Schiene vorgesehenen Klemmelementen 13 verbunden. Diese sind als um eine vertikale Schwenkachse 14 verschwenkbare und durch ein Querjoch 15 paarweise miteinander verbundene Klemmzangen 16 ausgebildet. Diese hebelförmigen Klemmzangen 16 liegen in Richtung senkrecht zur Längsrichtung der Stauchzylinder 3 bzw. zur Schienenlängsrichtung einander gegenüber und sind im Bereich ihres kurzen Hebelarmes jeweils mit einer zur Anlage an den Schienensteg vorgesehenen Klemmbacke 17 verbunden. Die längeren Hebelarme sind jeweils mit einem am Gehäuse 12 des anschließenden Aggregatblocks 2 beweglich befestigten Zugglied 18 gelenkig verbunden. Jedes der beiden Querjoche 15 ist durch einen in Längsrichtung der Stauchzylinder 3 verlaufenden, mittigen Spreizzylinder 19 mit dem angrenzenden Aggregat-Teil 4 bzw. 5 verbunden.

Wie insbesondere in Fig.1 ersichtlich, ist eine senkrecht zu den Schwenkachsen 14 der Klemmzangen 16 verlaufende gemeinsame Symmetrieebene 20 für die Klemmzangen 16 und die mit einem Aggregatblock 2 verbundenen Zugglieder 18 etwa mittig in bezug auf die Höhe der Klemmbacken 17 bzw. die Schienenhöhe angeordnet. Im Schweißaggregat 1 ist in bekannter Weise der Sekundärkreis einer Stromanlage integriert, um den Schweißstrom auf niedrige Spannung und die erforderliche hohe Stromstärke zu transformieren. Da durch die Umformung des Stromes und den Arbeitsablauf selbst hohe Temperaturen entstehen, wird das Schweißaggregat 1 gekühlt. So ist ein umfangreiches, nicht näher dargestelltes Kühlsystem eingebaut. Das Schweißaggregat 1 ist an einem doppelarmigen, an einer Schweißmaschine befestigten Teleskopkran aufgehängt. Die Energieversorgung erfolgt durch einen in der Schweißmaschine angeordneten Generator und eine Hydraulikpumpe. Zur Einleitung der verschiedenen Arbeitsgänge ist ein Steuerpult 21 vorgesehen.

Das Abbrennstumpf-Schweißaggregat 1 wird mit Hilfe des erwähnten Teleskopkranes der Schweißmaschine über den zu verschweißenden Schienenenden 7 zentriert, wobei sich die beiden Klemmzangen 16 durch Beaufschlagung der beiden Spreizzylinder 19 und die Klemmbacken 6 der Aggregat-Teile 4,5 in geöffneter Stellung (siehe untere Hälfte in Fig.2) befinden. Nach Auflage des Schweißaggregates 1 auf den Schienenkopf werden die beiden Spreizzylinder 19 gegensinnig beaufschlagt, wodurch die Klemmbacken 17 zur Anlage an den Schienensteg kommen. Gleichzeitig erfolgt durch Beaufschlagung der beiden nicht näher dargestellten, mit dem Hebelsystem 8 verbundenen Spannzylinder ein Anpressen der gleichzeitig als Elektroden wirksamen Klemmbacken 6 der Aggregat-Teile 4 bzw. 5 an den Schienensteg. Durch dieses Einspannen der beiden Schienenenden 7 erfolgt deren genaue höhen- und richtungsmäßige Zentrierung.

Im folgenden kommt es unter Druckbeaufschlagung der vier Stauchzylinder 3 gemäß den dargestellten Pfeilen in Fig.1 zu einer Relativbewegung der beiden Aggregatblöcke 2 sowie der beiden Klemmzangen-Paare 16 zueinander. Dabei führt die kniehebelförmige Ausbildung der Klemmzangen 16 automatisch zu einer sehr starken Anpressung der Klemmbacken 17 an den Schienensteg, wodurch die auf die beiden Schienenenden 7 aufzubringenden Zugkräfte zusätzlich zu den Klemmbacken 6 der Aggregat-Teile 4,5 auch durch die Klemmbacken 17 der Klemmzangen 16 aufbringbar sind. Sobald die beiden Schienenenden 7 einen entsprechenden Abstand zueinander aufweisen, kommt es unter Bildung eines Lichtbogens zur Erzeugung der für die Verschweißung erforderlichen Energie. Haben die Schienenenden nach dem festgelegten Schweißprogramm die richtige Schweißtemperatur erreicht, werden die vier Stauchzylinder 3 zur Einleitung des sogenannten Stauchschlages mit erhöhtem Druck beaufschlagt. Dadurch kommt es unter Zusammenpressen der auf Schmelztemperatur erwärmten Schienenenden zur Bildung einer Schweißverbindung. Da die Aufbringung dieser sehr hohen Stauchschlagkräfte durch ein eine gemeinsame bauliche Einheit bildendes System von Klemmbacken 6 der Aggregatblöcke 2 und mit diesen verbundenen Klemmzangen 16 erfolgt, ist deren synchroner Einsatz unter Vermeidung einer aufwendigen Steuereinrichtung gewährleistet. Die Stauchschlagkräfte werden noch bis zu einer geeigneten Belastbarkeit der Schweißverbindung nach entsprechender Abkühlung auf die Schienen ausgeübt, während durch Beaufschlagung der beiden Abscherzylinder 9 eine Längsverschiebung der Schweißwulst-Abschervorrichtung 10 zur Entfernung des Schweißwulstes erfolgt. Nach entsprechender Abkühlung der Schweißverbindung werden die Stauchzylinder 3 drucklos gesteuert und nach Beaufschlagung des mit den Aggregat-Teilen 4,5 verbundenen Spann-Anpreß- und Spreizzylinders 11,19 und daraus resultierender Öffnung der Klemmbacken 6 und 17 erfolgt eine Längsverschiebung der beiden Aggregatblöcke 2 entgegen der in Fig.1 dargestellten Pfeilrichtung in die Ausgangsstellung.

In Fig.3 und 4 dargestellte Klemmelemente 22 sind als zangenförmige, um eine in Längsrichtung der Stauchzylinder 3 verlaufende Achse 23 zueinander verschwenk- und an die beiden Längsseiten einer Schiene 24 anlegbare Zangenteile 25,26 ausgebildet. Diese sind in ihren oberen Endbereichen durch Verbindungsglieder 27 miteinander verbunden und mit Hilfe eines vertikalen Spannzylinders 28 von einer in vollen Linien dargestellten Klemmposition in eine mit strichpunktierten Linien (Fig.4) dargestellte Öffnungsposition verschwenkbar. Die beiden Zangenteile 25 und 26 sind in ihrem unteren Endbereich durch Zugglieder 29 gelenkig mit dem benachbarten Aggregatblock 2 verbunden. Die Verbindung der Zugglieder 29 mit den Zangenteilen 25,26 ist derart ausgebildet, daß zur Durchführung der Öffnungsbewegung auch eine geringfügige Verdrehung der Zugglieder 29 um eine in deren Längsrichtung verlaufende Achse möglich ist. Die unteren Endbereiche der Zangenteile 25, 26 weisen zur Anlage an den Schienensteg vorgesehene Klemmbacken 30 auf.

Zur Durchführung der Schweißverbindung werden gleichzeitig mit der Anlage der auf den Aggregatblöcken 2 befindlichen Klemmbacken 6 auch die Klemmbacken 30 der Klemmelemente 22 an den Schienensteg angepreßt, indem die Spannzylinder 28 zur Durchführung der Schließbewegung unter Druck gesetzt werden. Anschließend werden die beiden Schienenenden unter Beaufschlagung der Stauchzylinder 3 in der bereits beschriebenen Art und Weise miteinander verschweißt.

## Patentansprüche

1. Mobiles Abbrennstumpf-Schweißaggregat (1) mit zwei durch Stauchzylinder (3) in deren Längsrichtung zueinander verschiebbaren Aggregatblöcken (2), die jeweils zwei zangenförmig zueinander verschwenkbare Teile (4, 5) mit als Elektroden wirksamen Klemmbacken (6) zur Anlage an einander benachbarten Enden von Schienen (7) aufweisen, wobei jeder Aggregatblock (2) mit einem Gehäuse (12) versehen ist und wobei jedem Aggregatblock (2) ein zum beidseitigen Anpressen an die jeweilige Schiene (7) ausgebildetes, in Längsrichtung der Stauchzylinder (3) vom jeweiligen Aggregatblock (2) distanziertes Klemmelement (13, 22) zugeordnet ist, dadurch gekennzeichnet, daß jeweils ein Klemmelement (13, 22) mittels Zugstangen (18, 29) mit dem zugeordneten Aggregatblock (2) verbunden ist, die am Gehäuse (12) des zugeordneten Aggregatblockes (2) angelenkt sind.

2. Aggregat nach Anspruch 1, dadurch gekennzeichnet, daß als Klemmelemente (13) zwei bezüglich der Längsrichtung der Stauchzylinder (3) in Querrichtung einander gegenüberliegende hebelförmige, durch ein Querjoch (15) miteinander verbundene und je um eine Schwenkachse (14) verschwenkbare Klemmzangen (16) vorgesehen sind, die mit ihren zu den Schwenkachsen (14) weiter distanzierten Enden jeweils mit einer am Gehäuse (12) des anschließenden Aggregatblocks (2) gelenkig befestigten Zugstange (18) verbunden sind.

3. Aggregat nach Anspruch 1 oder 2, dadurch gekennzeichnet, daß die beiden Aggregatblöcke (2) durch insgesamt vier in einer gemeinsamen, horizontalen Ebene angeordnete, parallel zueinander verlaufende Stauchzylinder (3) miteinander verschiebbar verbunden sind.

4. Aggregat nach einem der Ansprüche 1,2 oder 3, dadurch gekennzeichnet, daß das die beiden Klemmzangen (16) miteinander verbindende Querjoch (15) durch einen parallel zur und in Längsrichtung der Stauchzylinder (3) verlaufenden Spreizzylinder (19) mit dem an die Klemmzangen (16) anschließenden Aggregatblock (2) verbunden ist.

5. Aggregat nach Anspruch 4, dadurch gekennzeichnet, daß jeweils ein Spreizzylinder (19) symmetrisch in bezug auf eine Längsmittellinie des Aggregates (1) und oberhalb der Stauchzylinder (3) angeordnet ist.

6. Aggregat nach einem der Ansprüche 1 bis 5, dadurch gekennzeichnet, daß eine senkrecht zu den Schwenkachsen (14) der Klemmzangen (16) verlaufende gemeinsame Symmetrieebene (20) für die Klemmzangen (16) und die mit einem Aggregatblock (2) verbundenen Zugstangen (18) etwa mittig in bezug auf die Höhe der Klemmbacken (17) bzw. die Schienenhöhe angeordnet ist.

7. Aggregat nach Anspruch 6, dadurch gekennzeichnet, daß die Zugstangen (18) sowohl um eine in Längsrichtung der Stauchzylinder (3) verlaufende Achse als auch um eine senkrecht zu dieser und vertikal verlaufende Achse verschwenkbar am Gehäuse (12) des zugeordneten Aggregatblocks (2) befestigt sind.

8. Aggregat nach einem der Ansprüche 1 bis 7, dadurch gekennzeichnet, daß ein Aggregatblock (2) mit einer durch zwei Abscherzylinder (9) in Längsrichtung der Stauchzylinder (3) verschiebbaren Schweißwulst-Abschervorrichtung (10) verbunden ist, wobei mit dieser verbundene Anpreßzylinder (11) gelenkig am Gehäuse (12) des Aggregatblocks (2) befestigt sind.

9. Aggregat nach Anspruch 1, dadurch gekennzeichnet, daß als jeweils mit einem Aggregatblock (2) verbundene Klemmelemente (22) zangenförmige, um eine in Längsrichtung der Stauchzylinder (3) verlaufende Achse (23) zueinander verschwenk- und an die beiden Schienenlängsseiten anpreßbare Zangenteile (25,26) vorgesehen sind, die im Bereich oberhalb der Achse (23) durch einen senkrecht in bezug auf die Längsrichtung der Stauchzylinder (3) verlaufenden, vertikalen Spannzylinder (28) miteinander und durch Zugstangen (29) mit einem Aggregatblock (2) verbunden sind.

## Claims

1. A mobile flash-butt welding set (1) with two block assemblies (2) which can be moved towards each other by means of upsetting cylinders (3) in the longitudinal direction thereof and which each comprise two components (4, 5) which can be pivoted towards each other in the manner of tongs, having clamping jaws (6) acting as electrodes, for resting on mutually adjacent ends of rails (7), wherein each block assembly (2) is provided with a housing (12) and wherein each block assembly (2) has associated therewith a clamping member (13; 22) designed for pressing against the respective rail (7) on both sides and separated from the respective block assembly (2) in the longitudinal direction of the upsetting cylinders (3), **characterized in that** a clamping member (13; 22) is respectively connected to the associated block assembly (2) by means of pull rods (18, 29) which are articulated to the housing (12) of the associated block assembly (2).

2. A set according to Claim 1, **characterized in that** the clamping members (13) are in the form of two lever-shaped clamps (16) which are situated opposite each other in the transverse direction in relation to the longitudinal direction of the upsetting cylinders (3) and are connected to each other by a crossbar (15) and can pivot about a respective pivot axis (14) and which are connected at their ends furthest away from the pivot axes (14) to a pull rod (18) secured in an articulated manner on the housing (12) of the adjacent block assembly (2).

3. A set according to Claim 1 or 2, **characterized in that** the two block assemblies (2) are connected to each other in a displaceable manner by a total of four upsetting cylinders (3) extending parallel to each other and situated in a common horizontal plane.

4. A set according to one of Claims 1, 2 or 3, **characterized in that** the crossbar (15) connecting the two clamps (16) to each other is connected to the block assembly (2) adjacent to the clamps (16) by a spreading cylinder (19) extending parallel to and in the longitudinal direction of the upsetting cylinders (3).

5. A set according to Claim 4, **characterized in that** a respective spreading cylinder (19) is symmetrically aligned to a longitudinal median line of the set (1) and above the upsetting cylinders (3).

6. A set according to one of Claims 1 to 5, **characterized in that** a common plane of symmetry (20), which extends at right angles to the pivot axes (14) of the clamps (16), for the clamps (16) and the pull rods (18) connected to a block assembly (2), is aligned approximately centrally in relation to the height of the clamping jaws (17) or the height of the rail.

7. A set according to Claim 6, **characterized in that** the pull rods (18) are secured on the housing (12) of the associated block assembly (2) so as to be pivotable both about an axis extending in the longitudinal direction of the upsetting cylinders (3) and about an axis extending vertically and at right angles thereto.

8. A set according to one of Claims 1 to 7, **characterized in that** one block assembly (2) is connected to a weld-bead shearing device (10) which is displaceable in the longitudinal direction of the upsetting cylinders (3) by two shearing cylinders (9), wherein pressure cylinders (11) connected to it are secured in an articulated manner on the housing (12) of the assembly block (2).

9. A set according to Claim 1, **characterized in that** clamping members (22) respectively connected to a block assembly (2) are provided in the form of tong-shaped grippers (25, 26), which can be pivoted towards each other about an axis (23) extending in the longitudinal direction of the upsetting cylinders (3) and can be pressed onto the two longitudinal sides of the rails and which are connected to a block assembly (2) by means of pull rods (29) and to each other in the area above the axis (23) by a vertical clamping cylinder (28) extending at right angles with respect to the longitudinal direction of the upsetting cylinders (3).

## Revendications

1. Appareil mobile de soudage par étincelage (1) comprenant deux blocs d'appareil (2) déplaçables l'un vers l'autre par des cylindres de refoulement (3) dans la direction longitudinale de ceux-ci qui présentent, respectivement, deux parties en forme de pince (4, 5) pouvant être pivotées l'une vers l'autre, avec des mâchoires de serrage (6) agissant comme électrodes pour l'application à des extrémités avoisinantes de rails (7), chaque bloc d'appareil (2) étant pourvu d'un boîtier (12), et à chaque bloc d'appareil (2) étant associé un élément de serrage (13, 22) réalisé pour l'application des deux côtés au rail respectif (7) et placé à une certaine distance dans la direction longitudinale des cylindres de refoulement (3) du bloc d'appareil respectif (2), caractérisé en ce qu'un élément de serrage (13, 22), respectivement, est relié au moyen de barres de traction (18, 29) au bloc d'appareil associé (2) qui sont articulées au boîtier (12) du bloc d'appareil (2) associé.

2. Appareil selon la revendication 1, caractérisé en ce que sont prévus comme éléments de serrage (13) deux pinces de serrage (16) qui se font face relativement à la direction longitudinale des cylindres de refoulement (3) dans la direction transversale, sous forme de levier, reliées l'une à l'autre par un organe transversal formant étrier (15) et pivotant, respectivement, autour d'un axe de pivotement (14), qui sont reliées par leurs extrémités plus éloignées des axes de pivotement (14) respectivement à une barre de traction (18) fixée de façon articulée au boîtier (12) du bloc d'appareil suivant (2).

3. Appareil selon la revendication 1 ou 2, caractérisé en ce que les deux blocs d'appareil (2) sont reliés de façon déplaçable l'un à l'autre par un ensemble de quatre cylindres de refoulement (3) disposés dans un plan horizontal commun et s'étendant parallèlement les uns aux autres.

4. Appareil selon l'une des revendications 1, 2 ou 3, caractérisé en ce que l'organe transversal formant étrier (15) reliant les deux pinces de serrage (16) est relié par un cylindre d'écartement (19) s'étendant parallèlement à et suivant la direction longitudinale des cylindres de refoulement (3) au bloc d'appareil (2) qui fait suite aux pinces de serrage (16).

5. Appareil selon la revendication 4, caractérisé en ce qu'un cylindre d'écartement (19), respectivement, est disposé de façon symétrique par rapport à une ligne médiane longitudinale de l'appareil (1) et au-dessus des cylindres de refoulement (3).

6. Appareil selon l'une des revendications 1 à 5, caractérisé en ce qu'un plan de symétrie commun (20) s'étendant perpendiculairement aux axes de pivotement (14) des pinces de serrage (16) pour les pinces de serrage (16) et les barres de traction (18) reliées à un bloc d'appareil (2) est disposé à peu près au milieu par rapport à la hauteur des mâchoires de serrage (17) ou à la hauteur des rails.

7. Appareil selon la revendication 6, caractérisé en ce que les barres de traction (18) sont fixées au boîtier (12) du bloc d'appareil associé (2) de façon pivotante aussi bien autour d'un axe s'étendant dans la direction longitudinale des cylindres de refoulement (3) qu'autour d'un axe s'étendant perpendiculairement à celui-ci et verticalement.

8. Appareil selon l'une des revendications 1 à 7, caractérisé en ce qu'un bloc d'appareil (2) est relié à un dispositif de cisaillement (10) du bourrelet de soudure déplaçable par deux cylindres de cisaillement (9) suivant la direction longitudinale des cylindres de refoulement (3), des cylindres de pression (11) reliés à celui-ci étant fixés de façon articulée au boîtier (12) du bloc d'appareil (2).

9. Appareil selon la revendication 1, caractérisé en ce que sont prévus comme éléments de serrage (22) reliés respectivement à un bloc d'appareil (2), des parties de pince (25, 26) en forme de pince pivotant l'une vers l'autre autour d'un axe (23) s'étendant suivant la direction longitudinale des cylindres de refoulement (3) et applicables aux deux côtés longitudinaux de rail qui sont reliées dans la zone au-dessus de l'axe (23) par un cylindre tendeur vertical (28) s'étendant perpendiculairement relativement à la direction longitudinale des cylindres de refoulement (3) l'une à l'autre et par des barres de traction (29) à un bloc d'appareil (2).
